# EUROPEAN PATENT SPECIFICATION

(11) **EP 2 653 452 B1**
(45) Date of publication and mention of the grant of the patent: **28.09.2016**
(21) Application number: 13153645.0
(22) Date of filing: 01.02.2013
(51) Int. Cl.: C02F 9/00, C10L 9/08, C02F 1/44, C02F 103/36

(54) **METHOD FOR THE TREATMENT OF PROCESS WATER FROM A HYDROTHERMAL ORGANIC CONVERSION PROCESS**
VERFAREN FÜR DIE BEHANDLUNG VON PROZESSWASSER AUS EINEM HYDROTHERMALEN ORGANISCHEN MATERIALUMWANDLUNGSVERFAHREN
PROCEDE POUR LE TRAITEMENT D'EAU PROVENANT D'UN PROCEDE DE CONVERSION DE MATERIAU ORGANIQUE HYDROTHERMIQUE

(30) Priority: 20.04.2012 EP 12165025
(43) Date of publication of application: 23.10.2013
(73) Proprietor: CS Carbon Solutions, 14532 Kleinmachnow (DE)
(72) Inventor: Stark, Arne, 12623 Berlin (DE); Maas, Dr. Robert, 14471 Potsdam (DE)
(74) Representative: Hoffmann Eitle

(56) References cited:
- EP-A1- 2 206 688
- WO-A1-97/28101
- WO-A1-2007/055011
- CN-A- 101 962 235
- CN-A- 101 993 165
- CN-A- 102 219 327
- DE-A1-102004 030 482
- DE-A1-102012 002 590
- US-A- 5 354 345
- US-A1- 2006 260 186
- US-A1- 2008 135 478
- US-A1- 2011 226 603
- US-B1- 6 267 891

## Description

### Field of the Invention

The invention relates to a method for the treatment of process water from a hydrothermal organic material conversion process. The present invention is employed for hydrothermal carbonisation (HTC) processes.

### Background Art

Process water can be degraded to a distinct level by aerobic and anaerobic wastewater treatment technologies, as is disclosed in DE-A-10 2009 024 287. The remaining part of the process water still has a high level of chemical oxygen demand (COD) which is mostly refractory, i.e., non-biodegradable, in its nature. Thus, the COD is not fully degradable by a biological treatment. It has been suggested to treat this remaining non-biodegradable COD by adsorption with activated carbon (H.-G. Ramke et al., Machbarkeitsstudie zur Energiegewinnung aus organischen Siedlungsabfällen durch Hydrothermale Carbonisierung, Deutsche Bundesstiftung Umwelt, Abschlussbericht, Höxter, October 2010, pp. 197 ff.). However, this is a rather expensive approach since the remaining refractory COD has to be treated separately and the anaerobic reactors presented are not economically feasible. If high salt concentrations in the filtrate stream are present, these will be found in the effluent of the anaerobic reactor as well and further treatment will be necessary.

Another treatment method of wastewater and CO₂ containing gases is disclosed in DE-B-10 2010 026 345. The wastewater is fed into basins with water plants which minimise the COD. The organic pollutants in the wastewater and the nutrients will be transferred to the water plants (e.g., duckweed or water hyacinths). The excess water is consumed by the plant roots, evaporated by the plant leaves and discharged from the specially designed greenhouse. The water plants are planted in basins which are arranged in up to 12 terraces over each other, in order to minimise area consumption. However, the area consumption is still high and, for a hydrothermal carbonisation (HTC) plant with a biomass input of 40,000 t per year, an estimated area of 1.5 hectares is required. Hence, also this approach exhibits problems with regard to economical feasibility.

In WO-A-2009/127727, an oxidising step is proposed to treat the liquid phase of a separation step after a second process step in a two-step HTC reactor by means of an oxidising agent, such as air.

Another treatment method for process water from an HTC process is disclosed in EP-A-2 206 688. The process water is oxidised under the conditions present in the HTC process by means of oxidising agents, such as oxygen, air or hydrogen peroxide. First, the product of the HTC process, namely a mixture of process water and solids, is separated under the conditions of the process. Subsequently, the process water is mixed with an oxidising agent (air, oxygen or hydrogen peroxide) and oxidation takes place, preferably with a catalyst present, e.g., ferrous salts. Oxidising agents, such as oxygen and hydrogen peroxides, and catalysts are expensive. Alternatively air can be used. However, all of the aforementioned oxidising agents produce large amounts of flue gases which have to be treated by expensive means. Therefore, also this method is problematic in terms of economical feasibility.

US-A-2006/0260186 relates to a method and an apparatus for intensifying the energy content of an organic material by converting the material into hydrocarbons and to the resulting product thereof. The resulting product is separated in a product recovery system using a membrane filter and an oil separator. A membrane filtration permeate may be further processed by feeding it to a separation unit, such as a reverse osmosis membrane unit.

DE-A-10 2009 010 233 discloses a process for generating coal from biomass by means of thermal carbonisation. Process water originating from this process may be purified either by ultrafiltration or by reverse osmosis.

However, the known methods and apparatuses for the treatment of process water from an organic material conversion process are limited in terms of efficiency and costs involved.

### Summary of the Invention

Accordingly, it is an object of the present invention to provide a method for the efficient and inexpensive treatment of process water from a hydrothermal organic material conversion process.

This goal is achieved by a method with the technical features of claim 1. Preferred embodiments of the invention follow from the dependent claims.

The present invention provides a method for the treatment of process water from a hydrothermal organic material conversion process, the method comprising a first separation step of separating the process water from a conversion product obtained in the hydrothermal organic material conversion process and a second separation step of separating the process water obtained in the first separation step into at least a first component and a second component so that the second component is substantially free of salts.

Further, the method comprises a membrane filtering step of filtering the second component using a membrane filter comprising a dense membrane. The hydrothermal organic material conversion process is a hydrothermal carbonisation (HTC) process. The conversion product is a solid material.

Herein, the term "salt" defines water-soluble inorganic compounds. The term "substantially free of salts" specifies that the salt content of the second component is 10% or less, preferably 8% or less, more preferably 6% or less, yet more preferably 4% or less, still more preferably 2% or less, yet still more preferably 1% or less and yet even still more preferably 0.5% or less of the salt content of the process water obtained in the first separation step.

The second component may contain 10% or less, preferably 8% or less, more preferably 6% or less, yet more preferably 4% or less, still more preferably 2% or less, yet still more preferably 1% or less and yet even still more preferably 0.5% or less of the monovalent and polyvalent ions present in the process water obtained in the first separation step.

The salt concentration of the second component may be 1.0 g/l or less, preferably 0.5 g/l or less, more preferably 0.2 g/l or less, yet more preferably 0.1 g/l or less, still more preferably 0.05 g/l or less, yet still more preferably 0.02 g/l or less and yet even still more preferably 0.01 g/l or less. The monovalent ions may be, for example, Na⁺, K⁺, Cl⁻etc. and the polyvalent ions may be, for example, Mg²⁺, SO4²⁻, Fe³⁺ etc.

Herein, the term "component" defines an entity which comprises one or more elements. The first component and/or the second component may comprise a single element, such as a single fluid stream, or a plurality of elements, such as a plurality of fluid streams.

The term "dense membrane" is well-known in the art of membrane filtering and defines a substantially non-porous membrane, allowing the transport of a medium therethrough mainly or only by diffusion. Preferably, herein, the dense membrane is a membrane with a salt retention of 90% or more, more preferably 92% or more, yet more preferably 94% or more, still more preferably 96% or more and yet still more preferably 98% or more for 32,000 ppm (parts per million) NaCl as the salt at a pressure of 55 bar, a temperature of 25 °C and a membrane yield of 10%. The term "salt retention" is defined as the fraction of the salt present in the medium to be filtered by the membrane which remains in the retentate of the membrane after the filtering process.

The dense membrane may be a membrane which is configured so that a permeate of the membrane filter has a level of chemical oxygen demand (COD) of less than 2.5 g/l. The COD is a commonly used measure of the amount of organic compounds in water and, thus, a reliable measure of the water quality. The COD is expressed in grams per litre (g/l) which indicates the mass of oxygen in grams consumed per litre of solution, i.e., required to fully oxidise the organic compounds to carbon dioxide.

In addition to providing a permeate with a low COD level and a low salt content, dense membranes offer the further advantage that the permeate is substantially free of refractory, i.e., non-biodegradable COD.

Therefore, permeates of dense membranes can be disposed to a public sewage system and/or treated elsewhere and/or reused in the hydrothermal organic material conversion process, i.e., the HTC process.

A biomass input into the hydrothermal organic material conversion process as a starting product may be at least weakly acidic. Specifically, the biomass may have a pH value of less than 7, preferably 5.5 or less, more preferably in a range from 3 to 5.5 and even more preferably in a range from 3 to 4.5. The term "biomass" as used herein is broadly understood as encompassing all kinds of plant and animal material and material derived from the same. Without limitation, examples of biomass are sewage sludge, crop, agricultural food and waste, feed crop residues, wood (such as wood flour, wood waste, scrap wood, sawdust, chips and discards), straw (including rice straw), grass, leaves, chaff, and bagasse. Furthermore, industrial and municipal wastes, including waste paper can be exemplified.

The process water from the hydrothermal organic material conversion process may be at least weakly acidic. Specifically, the process water to be treated may have a pH value of less than 7, preferably 5.5 or less, more preferably in a range from 3 to 5.5 and even more preferably in a range from 3 to 4.5.

The conversion product obtained in the hydrothermal organic material conversion process is a solid material, such as coal or the like. Further, the conversion product obtained in the hydrothermal organic material conversion process may be a liquid material, such as oil or the like, but such a configuration does not form part of the claimed invention.

Since the second component is substantially free of salts, also the retentate of the membrane filter, i.e., the flow which is retained by the membrane filter, and the permeate of the membrane filter, i.e., the flow passing through the membrane filter, are substantially free of salts. Hence, the method of the invention allows for an efficient reuse of the membrane filter retentate and/or the membrane filter permeate in the hydrothermal organic material conversion process, thereby reducing both the amount of wastewater to be disposed of and the need for fresh water in the hydrothermal organic material conversion process. In this way, the resources can be efficiently used and the costs of the process water treatment can be considerably reduced, thus enabling an efficient and inexpensive treatment of process water from a hydrothermal organic material conversion process.

The retentate of the membrane filter has a higher COD level than the permeate of the membrane filter. Thus, the membrane filter retentate may be particularly advantageously returned to a mixing stage of the hydrothermal organic material conversion process, i.e., the HTC process, to adjust the total solids content of the input biomass to a desired value and/or improve the quality of the conversion product, e.g., the HTC coal or coal-like material, as will be further detailed below.

The permeate of the membrane filter is low in COD and thus suitable for further treatment by inexpensive processes, such as biological treatment. Further, the permeate may be disposed to the public sewage system in an inexpensive manner or treated onsite in an industrial wastewater treatment plant.

The process water obtained in the first separation step is subjected to a second separation step prior to the membrane filtering step. The second component obtained in the second separation step may have a lower level of COD than the first component obtained in the second separation step. In this way, the membrane yield of the treatment process of the invention can be improved over the membrane yield of a process in which membrane filtering alone is performed.

Herein, the term "membrane yield" defines the percentage of the mass fraction of the process water which is present in the permeate of the membrane filter. For example, a 100% membrane yield specifies that 100% of the mass of the process water are present in the permeate of the membrane filter, while a membrane yield of 0% specifies that the entire mass of the process water remains in the retentate (concentrate) of the membrane filter, i.e., the flow which is retained by the membrane filter. By improving the yield of the membrane filter, the efficiency of the treatment process is further enhanced.

The first separation step may be carried out by mechanical and/or thermal steps, such as filtering and/or evaporation or the like.

The method of the invention is particularly advantageously applied to a hydrothermal carbonisation (HTC) process.

The HTC process leads to a coal slurry which is separated in the first separation step by mechanical and/or thermal means to gain a coal or coal-like material as the conversion product and process water. The coal or coal-like material can be used for combustion processes or the like or may be used as a raw material. A biomass fed to the HTC process should have a dry solids content in a range from 20 to 30%, preferably approximately 25%, for an economically feasible operation of the HTC system. Many types of available biomass have a higher dry solids content, e.g., leaves from street collection or the like. These types of biomass have to be mixed with water, preferably water from the HTC process, in order to achieve the desired dry solids content.

The HTC technology provides the following main advantages:

A combustion material with a better lower heating value than the original wet biomass can be obtained. Further, a wet biomass with a bad filterability in terms of the achievable total solids content is transformed into a coal slurry which can be easily separated in the first separation step into a wet HTC coal or coal-like material and process water by mechanical means. The dry solids content of the separated HTC coal or coal-like material can be easily doubled as compared to the input wet biomass by mechanical means. Moreover, the salts of the biomass, i.e., the monovalent and polyvalent ions, are efficiently separated from the coal or coal-like material and thus mainly present in the process water obtained in the first separation step.

The HTC coal or coal-like material obtained as a conversion product in the first separation step only contains a fraction of monovalent ions, such as chlorides, K ions and Na ions. The chlorides, the K ions and the Na ions are mainly found in the process water obtained in the first separation step. Usually, the biomass used in the HTC process is low in chlorides, K ions and Na ions, leading to a low chloride, K and Na content of the HTC coal. Since most of the chlorides, the K ions and the Na ions are removed from the HTC coal slurry in the first separation step, the HTC coal can be advantageously used in a subsequent combustion process, providing a low corrosion performance of the combustion gases and a high softening temperature of a resulting furnace slag.

Through the chemical conversion process under the specific conditions present in the HTC process, such as temperature and pressure, the biomass fed to the HTC process is transformed to a slurry consisting mainly of coal particles and salts and/or minerals, which are suspended or dissolved, and organic components dissolved in water. After the first separation step, the dissolved organic components and the salts and/or minerals are mainly present in the process water. The dissolved organic components are of a diverse nature and are mainly responsible for the level of COD in the process water.

The biological or biochemical oxygen demand (BOD) is the amount of dissolved oxygen needed by aerobic biological organisms in a body of water to break down organic material present in the water at a certain temperature over a specific period of time. The 5-day BOD value is specified in grams of oxygen consumed per litre of water during five days of incubation at 20 °C. A part of the COD of the process water is refractory in its nature, i.e., non-biodegradable.

The presence of refractory COD in the process water is indicated by a ratio of the COD to the 5-day biological or biochemical oxygen demand (BOD5) of more than 2.

The process water obtained in the first separation step is a polluted wastewater stream with high COD levels and organic as well as inorganic impurities which cannot be disposed to receiving waters and wastewater treatment plants due to common legal requirements. Therefore, a treatment of the HTC process water is necessary.

The method of the invention helps to resolve the following issues associated with the treatment of HTC process water and, thus, can be applied in a particularly advantageous manner to this process.

Only a part of the HTC process water can be reused in the mixing stage of the HTC process, depending on the amount of total solids present in the biomass input to the HTC process. The process water being reused in the mixing stage should be low in salt content to maintain a high quality of the HTC coal, as has been detailed above. Since the membrane filter retentate and the membrane filter permeate are substantially free of salts, at least a part of the retentate and/or at least a part of the permeate can be reused in the mixing stage of the HTC process without compromising the quality of the HTC coal. In this way, the need for fresh water in the HTC mixing stage can be reduced or even eliminated, thus further improving the efficiency and reducing the costs of the process. Moreover, the amount of wastewater which has to be disposed of is reduced.

Further, since the membrane filter retentate and the membrane filter permeate are substantially free of salts, problems associated with a possible corrosion of the HTC equipment can be reliably prevented in an efficient and inexpensive manner.

Preferably, the amount of process water being reused in the mixing stage of the HTC process does not exceed the amount needed to adjust the total solids content of the input biomass to a desired value. A high total solids content above 20% is preferable because, in this case, the operation of the HTC plant is more feasible from a technical and economical point of view. A total solids content of 25% is particularly advantageous for the operation of the HTC process. Above a total solids content of 25%, the pumpability of certain types of biomass might be limited, thus rendering a transport of the biomass into the HTC process difficult or even impossible.

Refractory COD must be removed from the process water prior to disposal thereof. In some countries, a bio-degradable and low COD, such as less than 2.5 g/l, in the water to be disposed of has to be achieved due to legal regulations. Otherwise, disposal of the water is prohibited or may be only allowed if expensive additional fees are paid. An efficient removal of refractory COD from the permeate of the membrane filtering step is achieved by using a dense membrane in the membrane filter, as has been detailed above.

The salts present in the biomass must be excluded from the HTC process to achieve a good quality of the HTC coal or coal-like material. Hence, the treatment of the process water, in which most of the salts are present, has to include the separation of these salts from the water which is to be reused in the HTC process. In particular, monovalent ions, such as chlorides, K ions or Na ions, have to be removed. A low salt load in the return stream to the HTC mixing stage, e.g., less than 2% of the monovalent and polyvalent ions present in the process water obtained in the first separation step, is acceptable while its overall salt load is low.

Since the membrane filter retentate and the membrane filter permeate are substantially free of salts, at least a part of the retentate and/or at least a part of the permeate can be efficiently reused in the HTC process, as has been detailed above.

Subsequent drying of the coal or coal-like material separated in the first separation step leads to nearly dry coal particles and a dryer condensate. Other condensates from condensation processes from different sources of the HTC process, such as excess steam at varying pressure levels, may also be present. The process water from the HTC process and these condensates can only be partly reused in the HTC process due to the above-mentioned requirements regarding the total solids content of the mixed biomass sludge. Further, most of the salt load of the process water is to be excluded from the HTC process, as has been detailed above.

The condensates and the process water are very different in their nature. Specifically, the condensates are low salt fluids with medium levels of COD, i.e., more than 2.5 g/l and less than the COD of the process water obtained in the first separation step. The COD level of the process water obtained in the first separation step may be in a range from 20 to 120 g/l, preferably from 30 to 60 g/l and more preferably from 45 to 55 g/l. Due to these different compositions of the condensates and the process water, the methods for their treatment may have different requirements. The above-mentioned legal requirements with regard to the COD level of wastewater to be disposed of also apply to these condensates.

The method of the invention may be applied to a combination of the process water, i.e., the HTC process water, and/or condensates produced in the hydrothermal organic material conversion process, i.e., the HTC process, and/or flue gases originating from the hydrothermal organic material conversion process, i.e., the HTC process, as will be detailed below.

The condensates produced in the hydrothermal organic material conversion process, i.e., the HTC process, may be generated, for example, during flashing or during further processing of the solid products, such as the HTC coal or coal-like material, e.g., during drying.

At least a part of the condensates produced in the hydrothermal organic material conversion process, i.e., the HTC process, may be supplied to the membrane filter and filtered in the membrane filter together with the second component. Since the second component is substantially free of salts and the condensates produced in the hydrothermal organic material conversion process, i.e., the HTC process, have a low salt content, the retentate of the membrane filter is low in salts and can thus be advantageously returned to the hydrothermal organic material conversion process.

The second separation step may be a concentration step. In one embodiment, the second separation step is a thermal concentration step, such as an evaporation step. This approach is particularly advantageous if an inexpensive heat source, such as cooling water of a combined heat and power unit, is available. The thermal concentration step may be an evaporation step, such as a vacuum evaporation step.

In the thermal concentration step, the process water obtained in the first separation step is separated into a concentrate containing most of the COD load of the process water and nearly all of the salts thereof, e.g., 90% or more, preferably 95% or more, more preferably 98% or more, even more preferably 99% or more and yet even more preferably 99.5% or more thereof, as the first component and a distillate and/or a vapour and/or a steam/vapour mixture as the second component. The vapour and the steam/vapour mixture can be condensed into a distillate. The distillate and/or vapour and/or steam/vapour mixture generated in the thermal concentration step is substantially free of salts and has a medium level of COD after condensation thereof. Further, small amounts of flue gases may be generated in the thermal concentration step, such as an evaporation step, which may be treated in a combustion unit, as will be detailed below.

Condensation of the vapour and/or steam/vapour mixture separated in the thermal concentration step, e.g., the evaporation step, produces a condensate with a composition which is similar to that of the above-mentioned condensates from the HTC process. Also a distillate separated in the thermal concentration step has a composition which is similar to that of the above-mentioned condensates from the HTC process.

The concentrate separated in the thermal concentration step as the first component can be advantageously used in a combustion step due to its high COD level, preferably above 100 g/l. Preferably, the lower heating value of the concentrate produced in the evaporation step is 0 or higher, so that less auxiliary fuel is required for the combustion thereof.

Further, the reduction of volume achieved by the thermal concentration step facilitates disposal of the concentrate by turning it over to a dedicated waste disposal company. Moreover, at least a part of the concentrate may be used as an industrial additive, for example, as an adhesive agent, e.g., for wood pelleting. Also, at least a part of the concentrate may be used for the generation of biogas, e.g., by anaerobic digestion.

The distillate and/or the condensed vapour and/or the condensed steam/vapour mixture of the thermal concentration step, e.g., the evaporation step, which is substantially free of salts and has a medium COD level, is fed to the membrane filter as the second component to be filtered in the membrane filtering step, leading to an improvement of the membrane yield of the treatment process.

By employing a thermal concentration step as the second separation step, the process water from the hydrothermal organic material conversion process, i.e., the HTC process, can be efficiently and inexpensively treated in a particularly simple manner.

Moreover, the second separation step may be a combined nanofiltration and thermal concentration step, e.g., a combined nanofiltration and evaporation step. The combination of a nanofiltration step with a thermal concentration step, e.g., an evaporation step, can be advantageously used to improve the overall efficiency of the second separation step.

The nanofiltration may be performed by using a membrane filter comprising a nanofiltration membrane. The nanofiltration separates the process water obtained in the first separation step into a retentate (concentrate) and a permeate. The retentate and the permeate of the nanofiltration have the following COD characteristics.

The major part of the COD is present in the retentate. Specifically, the COD level in the retentate may be at least twice as high as the COD level in the process water obtained in the first separation step. A part of the original COD load present in the process water obtained in the first separation step may pass through the filter, such as the nanofiltration membrane, and be present in the permeate. A medium level of COD may be present in the permeate of the nanofiltration step, which is lower than the COD of the process water obtained in the first separation step and higher than the low COD level, e.g., higher than 2.5 g/l.

The salt and/or mineral content distribution between the nanofiltration retentate and the nanofiltration permeate depends on the characteristics of the filter used, such as the membrane characteristics of a nanofiltration membrane. The filter, e.g., the nanofiltration membrane, may be configured so that it retains most of the salts present in the process water obtained in the first separation step, for example, more than 50%, preferably 70% or more, more preferably 90% or more, yet more preferably 95% or more and still more preferably 98% or more thereof.

Further, the filter, e.g., the nanofiltration membrane, may be configured so that it retains, for example, 10% or more, preferably 20% or more, more preferably 40% or more, yet more preferably 50% or more, still more preferably 60% or more and yet still more preferably 70% or more of the monovalent ions present in the process water obtained in the first separation step and/or, for example, 50% or more, preferably 60% or more, more preferably 70% or more, yet more preferably 80% or more and still more preferably 90% or more of the polyvalent ions present in the process water obtained in the first separation step.

Alternatively, the filter, e.g., the nanofiltration membrane, may be configured so that most of the salts present in the process water obtained in the first separation step, for example, more than 50%, preferably 70% or more, more preferably 90% or more, yet more preferably 95% or more and still more preferably 98% or more thereof, pass through the filter into the nanofiltration permeate.

Further, the filter, e.g., the nanofiltration membrane, may be configured so that, for example, 10% or more, preferably 20% or more, more preferably 40% or more, yet more preferably 50% or more, still more preferably 60% or more and yet still more preferably 70% or more of the polyvalent ions present in the process water obtained in the first separation step and/or, for example, 50% or more, preferably 60% or more, more preferably 70% or more, yet more preferably 80% or more and still more preferably 90% or more of the monovalent ions present in the process water obtained in the first separation step pass through the filter into the nanofiltration permeate.

If the filter used in the nanofiltration, e.g., the nanofiltration membrane, retains most of the salts present in the process water obtained in the first separation step, most of the salt load will be found in the retentate and therefore, preferably, the retentate is not returned to the mixing stage of the hydrothermal organic material conversion process, i.e., the HTC process, but disposed of and/or treated elsewhere, for example, in the combustion unit, which will described below. Treatment of the nanofiltration retentate in the combustion unit is particularly preferable if the COD level of the retentate is equal to or higher than approximately 100 g/l. In this case, the retentate has a lower heating value of zero or more, so that less auxiliary fuel is needed for the combustion thereof.

If the filter used in the nanofiltration, e.g., the nanofiltration membrane, is configured so that most of the salts present in the process water obtained in the first separation step pass through the filter, the salts from the process water are mainly present in the nanofiltration permeate.

The retentate of the nanofiltration may have a medium salt load, e.g., 10% or less of the original monovalent ions and less than 30% of the polyvalent ions present in the process water, and a high level of COD, i.e., a COD level which is higher than the COD level of the process water obtained in the first separation step. Hence, in this case, the retentate of the nanofiltration may be returned to the mixing stage of an HTC process without compromising the quality of the HTC coal or coal-like material.

In the combined nanofiltration and thermal concentration step, four flows are generated, namely the permeate of the nanofiltration, the distillate and/or condensate of the vapour and/or condensate of the steam/vapour mixture from the thermal concentration step, e.g., the evaporation step, minor amounts of flue gases and the concentrate of the thermal concentration step. Depending on the characteristics of the filter used for the nanofiltration, e.g., the nanofiltration membrane, the major part of the salt load is either present in the nanofiltration permeate or the nanofiltration retentate. In this combined approach, the nanofiltration may be performed prior to the thermal concentration, e.g., the evaporation. Specifically, the nanofiltration retentate may be fed as an input flow to a thermal concentrator, such as an evaporation unit, where it is separated into a concentrate as the first component and a distillate and/or a vapour and/or a steam/vapour mixture as the second component. The flue gases generated in the combined nanofiltration and thermal concentration step may be treated in the combustion unit, as will be further detailed below.

Using a thermal concentration step or a combined nanofiltration and thermal concentration step as the second separation step further provides the following advantages:

The thermal concentration step and the combined nanofiltration and thermal concentration step enhance the performance of the subsequent membrane filtering step, improving the membrane yield of the treatment process. In particular, if a reverse osmosis membrane is used in the membrane filter of the membrane filtering step, the membrane yield of the reverse osmosis filtering step may be increased from a level of approximately 37% to a level above 75 to 85%.

The retentate of the membrane filtering step is substantially free of salts and may have a high level of COD. Thus, the membrane filter retentate may be burned in the combustion unit or at least partly returned to the mixing stage of the hydrothermal organic material conversion process, i.e., the HTC process, to adjust the total solids content of the input biomass to a desired value and/or improve the quality of the HTC coal or coal-like material. The nanofiltration retentate may have a high salt load, e.g., more than 50% of the monovalent ions and more than 90% of the polyvalent ions present in the process water obtained in the first separation step, and a high level of COD, preferably above 100 g/l. In this case, the nanofiltration retentate can be advantageously burned in the combustion unit, allowing for the salts contained therein to be removed as ash in a simple and efficient manner. Further, the nanofiltration retentate may be fed as an input flow to the thermal concentrator, as has been detailed above.

The concentrate produced in the thermal concentration step, e.g., the evaporation step, contains all salts and most of the COD load. In this case, the concentrate can be advantageously used as a fuel in the combustion unit where the salts from the process water can be removed as ash in a simple and efficient manner. Moreover, the concentrate can be turned over to a dedicated waste disposal company and/or used as an industrial additive, e.g., as an adhesive agent, e.g., for wood pelleting, and/or used for the generation of biogas, e.g., by anaerobic digestion.

Further, the distillate and/or the condensed vapour and/or the condensed steam/vapour mixture of the thermal concentration step, e.g., the evaporation step, is substantially free of salts and has a medium level of COD. Thus, the retentate of the membrane filtering step may be used at least partly in the mixing stage of the hydrothermal organic material conversion process, i.e., the HTC process. The remaining part or all of the membrane filter retentate may be burned in the combustion step. Preferably, the lower heating value of the retentate is equal to or greater than zero. In this case, the retentate may be used as a supplementary heat source for steam generation or other heat sinks in the hydrothermal organic material conversion process, i.e., the HTC process. Further, the retentate may be sold as a liquid fuel.

In one embodiment, the membrane filtering step is a reverse osmosis filtering step using a reverse osmosis membrane filter comprising a reverse osmosis membrane as the dense membrane. In this case, the membrane filtering step can be performed in a particularly efficient manner, leading to a permeate with a low level of biodegradable COD which is substantially free of salts. Hence, the membrane filtering permeate can be easily disposed to a municipal or industrial sewage system and/or a wastewater treatment plant. Further, the permeate may be used as a freshwater substitute in the hydrothermal organic material conversion process, i.e., the HTC process.

The membrane filtering step, e.g., a reverse osmosis filtering step, may be combined with a thermal concentration step, e.g., an evaporation step, in order to achieve a further thickening of the membrane filter retentate.

As has been mentioned above, the method of the invention may further comprise a combustion step of combusting at least a part of the first component obtained in the second separation step and/or at least a part of the retentate of the membrane filter obtained in the membrane filtering step. In this case, at least a part of the salt load present in the first component can be removed from the hydrothermal organic material conversion process as ash in a reliable and efficient manner. Preferably, the lower heating value of the first component and/or the membrane filter retentate is zero or more so that less auxiliary fuel is needed for the combustion thereof. More preferably, the lower heating value of the first component and/or the membrane filter retentate is in a range from 3 to 5 MJ/kg.

Moreover, flue gases from the hydrothermal organic material conversion process, i.e., the HTC process, may be burned in the combustion step. In some embodiments, external supplementary fuels, such as heating oil, natural gas, biogas and the like, may be used in the combustion step.

Preferably, the lower heating value of the total solids content in the first component and/or the membrane filter retentate is as high as or higher than the energy needed for the evaporation of the remaining water in the first component and/or the membrane filter retentate, respectively.

In the combustion step, flue gases from the hydrothermal organic material conversion process, at least a part of the first component, at least a part of the membrane filter retentate, external supplementary fuel or a combination of these components can be treated. Therefore, the efficiency of the method of the invention can be further improved.

Refractory COD may be burned in the combustion step with the first component and/or the membrane filter retentate or returned to the mixing stage of the hydrothermal organic material conversion process if the salt content is at least medium or even low. The salt load in the first component can be removed as ash after the combustion step.

Further, water from the treatment process can be excluded from the hydrothermal organic material conversion process, i.e., the HTC process, as water vapour in the combustion step, thereby lowering the amount of water to be disposed to a wastewater treatment plant. In this way, a combustion unit used in the combustion step can serve as a sink for excess water which cannot be reused in the hydrothermal organic material conversion process, i.e., the HTC process.

At least a part of a combustion heat generated in the combustion step may be used in the hydrothermal organic material conversion process and/or a processing step of the conversion product, such as a drying step, a further separation step, e.g., by evaporation, or the like. In this way, the treatment process can be carried out in a particularly energy and cost efficient manner. The combustion heat may be transferred from the combustion unit, for example, by using a heat exchanger, a heat pipe or any type of heat carrier, such as oil or the like.

In particular, at least a part of the combustion heat may be used for the generation of steam in a steam generator, as will be further detailed below.

In one embodiment, the method of the invention further comprises a step of returning at least a part of the retentate of the membrane filter to the hydrothermal organic material conversion process, i.e., the HTC process, as has been detailed above. In particular, since the membrane filter retentate is substantially free of salts, at least a part thereof may be advantageously reused for adjusting the total solids content of the biomass input into the hydrothermal organic material conversion process, for example, in the mixing stage of an HTC process, to a desired value.

Further, at least a part of the permeate of the membrane filter may be supplied to a steam generator for generating steam to be used in the hydrothermal organic material conversion process, i.e., the HTC process. Moreover, a part of the membrane filter permeate may be used for adjusting the total solids content of the biomass in the hydrothermal organic material conversion process, while another part of the membrane filter permeate may be supplied to the steam generator.

In this way, the membrane filter permeate may be used as a substitute for fresh water in the steam generator, thus leading to a reduction in fresh water consumption and a lower amount of water to be disposed to a public or industrial wastewater treatment plant. The disposal of wastewater to a wastewater treatment plant is expensive and fresh water has to be bought. Therefore, an at least partial reuse of the membrane filter permeate offers a further reduction of the process costs.

At least a part of the heat required for the generation of steam in the steam generator may be provided in the form of combustion heat from the combustion unit.

Such a reuse of at least a part of the membrane filter permeate can be particularly advantageously applied to the HTC process. In particular, the HTC process uses as a favourable implementation a steam generator producing steam to heat the biomass to the temperature levels needed in the process. This steam generator usually uses a substantial amount of fresh water in the process. However, water which is substantially free of salts and has a low organic content, such as the membrane filter permeate, is acceptable for use in the steam generator as a fresh water substitute.

According to an embodiment of the invention, at least a part of the membrane filter permeate may be used for generating steam in the HTC steam generator, thereby reducing or even eliminating the need for fresh water. Moreover, the amount of wastewater which has to be disposed of is reduced. The amount of steam needed in the HTC process can be as high as the amount of the membrane filter permeate, so that the HTC process can be performed in a wastewater free manner.

The HTC process produces steam containing organic compounds. The steam may be condensed in a scrubber and the organic compounds are either present in the condensates or will be released in the flue gases of the scrubber. These flue gases may be burned in the combustion step, as has been detailed above.

Further, if the membrane filter permeate is used for steam generation, it may be treated to improve the input quality to the steam generator by means of a treatment step, e.g., another membrane filtering step, such as a reverse osmosis filtering step, and/or an ion exchange step and/or an activated carbon step and/or a step of adding a chemical and/or pH adjustment component, such as an amine solution, and/or degassing, e.g., by a thermal step, or the like. In particular, the addition of a pH adjustment component helps to prevent corrosion of the steam generator.

In one embodiment, the method of the invention further comprises the step of mixing condensates generated in the hydrothermal organic material conversion process and/or a processing step of the conversion product into the process water obtained in the first separation step prior to the second separation step and/or into the second component prior to the membrane filtering step and/or into the permeate of the membrane filter. In this way, these condensates, e.g., condensates generated in an HTC process, can be treated together with the process water in the second separation step and/or the membrane filtering step and/or the combustion step, thus enhancing the efficiency of the treatment process.

The processing step of the conversion product may be, for example, a drying step, a further separation step, e.g., by evaporation, or the like. In particular, the condensates may be dryer condensates, e.g., obtained in a process of drying wet HTC coal or coal-like material.

The membrane filtering step produces a retentate which has a medium to high level of COD depending on the COD level of the second component and/or the COD level of the condensates, if these are mixed with the process water obtained in the first separation step and/or with the second component prior to the membrane filtering step.

The second component and one or more condensates generated in the hydrothermal organic material conversion process and/or a processing step of the conversion product can be concentrated by the membrane filtering step, leading to a permeate with a low and bio-degradable COD which can be easily disposed of.

In one embodiment, the second separation step comprises a first filtering step of filtering the process water obtained in the first separation step and a second filtering step of filtering a permeate obtained in the first filtering step. The second separation step further comprises a supply step of supplying a retentate obtained in the first filtering step and a retentate obtained in the second filtering step to a concentrator, such as a thermal concentrator, and a concentration step, such as a thermal concentration step, of concentrating the retentate obtained in the first filtering step and the retentate obtained in the second filtering step in the concentrator so as to obtain the second component.

The concentrator may be a thermal concentrator. The concentrator may consist of a single unit or several, parallel and/or subsequent units. The configuration of the concentrator, e.g., the thermal concentrator, may be chosen depending on the desired factor of concentration as well as capacity issues. The thermal concentrator may be an evaporator (evaporation unit), e.g., a vacuum evaporator (vacuum evaporation unit) in which the pressure within the evaporation is lowered. In this case, for example, heat of the cooling water of a co-generation unit or the like may be used as an inexpensive heat source for the thermal concentrator.

The concentration step produces a concentrate which is rich in humic and mineral nutrients. Depending on the remaining water concentration in the concentrate, the concentrate has a consistency ranging from watery over viscous, e.g., honey-like, to solid. For example, the concentrate may be used as an organic glue, e.g., for wood pelleting operations, and/or for the production of biogas, e.g., by anaerobic digestion.

The concentration step, e.g., the thermal concentration step, may be performed by using the same equipment which is used for the drying of the solid products of the hydrothermal organic material conversion process. This approach is particularly advantageous if the quality of the produced solids in terms of carbon content, ash content and ash constitution is of secondary importance. In this way, the process water treatment process can be performed in a particularly inexpensive manner using a simple setup.

The first component may be formed by the concentrate of the concentrator, e.g., the thermal concentrator, or comprise the concentrate of the concentrator and a permeate obtained in the second filtering step.

The second component obtained in the concentration step, e.g., the thermal concentration step, may be a distillate and/or a vapour and/or a steam/vapour mixture which can be condensed into a distillate. Such a distillate may still contain organic components, predominantly of smaller molecular weight and with non-negligible vapour pressure, but is substantially free of salts. The distillate is supplied to the membrane filter and subjected to the membrane filtering step. Further substantially salt free wastewater streams, such as condensates generated by the hydrothermal organic material conversion process, e.g., during flashing or during further processing of the solid products, e.g., during drying, may be also supplied to the membrane filter and subjected to the membrane filtering step together with the distillate (condensate).

In this way, a membrane filter retentate which is substantially salt free and has a high level of COD can be obtained. As has been detailed above, at least a part of this membrane filter retentate can be advantageously returned to the hydrothermal organic material conversion process, i.e., the HTC process, for adjusting the total solids content of the biomass input into the process, for example, in the mixing stage of the HTC process, to a desired value. At least a part of the membrane filter retentate can be returned to the hydrothermal organic material conversion process during an initial mashing preparation of the biomass in order to adjust the total solids content and the pumpability of the input biomass or parts thereof. In this way, a pH adjustment of the biomass input material towards lower pH values can also be facilitated. Since the retentate of the membrane filter is substantially free of salts and non-volatile organics, the membrane filter retentate may be subjected to a further thermal concentration step, e.g., a further evaporation step, and a concentrate obtained in this further thermal concentration step may be used as a recycling heat carrier.

The permeate of the second filtering step may be disposed to a municipal or industrial sewage system and/or a wastewater treatment plant and/or returned to the hydrothermal organic material conversion process, e.g., for adjusting the total solids content at the mixing stage or for steam generation in the steam generator.

The first filtering step may be a nanofiltration step. The first filtering step may be nanofiltration step using a nanofiltration membrane as described above. The nanofiltration step separates the process water obtained in the first separation step into a retentate (concentrate) and a permeate. The retentate and the permeate of the nanofiltration step, i.e., the first filtering step, have the COD characteristics described above in connection with the nanofiltration membrane.

The second filtering step may be membrane filtering step using a membrane filter comprising a dense membrane. The dense membrane may be a membrane which is configured so that a permeate of the membrane filter has a level of COD of less than 2.5 g/l and contains less than 2% of monovalent and polyvalent ions present in the process water obtained in the first separation step. Further, the permeate is substantially free of refractory, i.e., non-biodegradable COD.

In this case, the composition of the permeate of the second filtering step is very similar to the composition of the permeate of the membrane filtering step. The permeate of the second filtering step and the permeate of the membrane filtering step may thus be advantageously combined, e.g., into a single stream, for further use and/or disposal thereof, as has been detailed above.

The second filtering step may be a reverse osmosis filtering step using a reverse osmosis membrane filter as described above.

In the supply step, the retentate obtained in the first filtering step and the retentate obtained in the second filtering step may be supplied to the concentrator together or simultaneously.

The supply step of supplying the retentate obtained in the first filtering step and the retentate obtained in the second filtering step to the concentrator may be performed using a supply unit.

The second filtering step and the membrane filtering step of filtering the second component may be performed using different membrane filters. Alternatively, the second filtering step and the membrane filtering step of filtering the second component may be performed using the same membrane filter. In this case, a single membrane filter is used both for the second filtering step and the membrane filtering step of filtering the second component. Since, in this case, only a single membrane filter is required, the method of the invention can be performed in a particularly efficient and inexpensive manner using a simple setup.

If the same membrane filter, i.e., the same single membrane filter, is used for the second filtering step and the membrane filtering step of filtering the second component, the membrane filter may be operated in alternating roles, i.e., alternating between the second filtering step and the membrane filtering step. In this case, two buffer vessels may be connected to the membrane filter in parallel to each other, one for receiving the permeate of the first filtering step and the other for receiving the second component and possibly condensates from the hydrothermal conversion process and/or adjacent product treatment.

The present disclosure further provides an apparatus for the treatment of process water from a hydrothermal organic material conversion process, the apparatus comprising a first separation unit for separating the process water from a conversion product obtained in the hydrothermal organic material conversion process and a second separation unit connected to the first separation unit.

The second separation unit is arranged to receive the process water from the first separation unit and to separate the process water into at least a first component and a second component so that the second component is substantially free of salts. Further, the apparatus comprises a membrane filter connected to the second separation unit and comprising a dense membrane, wherein the dense membrane is arranged to receive the second component from the second separation unit and to filter the second component. The hydrothermal organic material conversion process is a hydrothermal carbonisation process. The conversion product is a solid material.

Preferably, herein, the dense membrane is a membrane with a salt retention of 90% or more, more preferably 92% or more, yet more preferably 94% or more, still more preferably 96% or more and yet still more preferably 98% or more for 32,000 ppm NaCl as the salt at a pressure of 55 bar, a temperature of 25°C and a membrane yield of 10%, as has been detailed above.

The dense membrane may be a membrane which is configured so that a permeate of the membrane filter has a level of COD of less than 2.5 g/l.

The first separation unit may be a filter, a thermal separation unit, such as an evaporator, a combined mechanical and thermal separation unit or the like. For example, the first separation unit may be a filter press unit, e.g., with additional pressure membrane equipment, a centrifuge unit, a belt press unit or the like.

The apparatus according to the disclosure provides the advantageous effects already described in detail above for the method of the invention. In particular, the apparatus enables an efficient and inexpensive treatment of process water from a hydrothermal organic material conversion process.

The hydrothermal organic material conversion process is a hydrothermal carbonisation process. Hence, the apparatus of the disclosure can be used in a particularly advantageous manner, as has been explained in detail above.

The second separation unit may be a concentrator, e.g., a thermal concentrator, such as an evaporation unit. Further, the second separation unit may be a combined nanofiltration and thermal concentration unit, e.g., a combined nanofiltration and evaporation unit. Nanofiltration may be performed using a membrane filter comprising a nanofiltration membrane as described above. The concentrator, e.g., the thermal concentrator, and the combined nanofiltration and thermal concentration unit are configured to perform the concentration step, e.g., the thermal concentration step, and the combined nanofiltration and thermal concentration step, respectively, which have been described in detail above.

The dense membrane of the membrane filter may be a reverse osmosis membrane.

The apparatus of the disclosure may further comprise a combustion unit for combusting at least a part of the first component and/or at least a part of a retentate of the membrane filter. The combustion unit is configured to perform the combustion step of the method of the invention as detailed above. The combustion unit may be a furnace, a kiln, an oven or the like.

The apparatus may further comprise a heat transfer unit, such as a heat exchanger, a heat pipe or any type of heat carrier, such as oil or the like, for transferring combustion heat from the combustion unit. In this way, at least a part of the combustion heat generated in the combustion unit can be used in the hydrothermal organic material conversion process and/or a processing step of the conversion product. In particular, the heat transfer unit may be configured to transfer at least a part of the combustion heat from the combustion unit to a steam generator, so that at least a part of the combustion heat can be used for the generation of steam in the steam generator.

The apparatus of the disclosure may further comprise a recirculation unit for returning at least a part of the permeate of the membrane filter to the hydrothermal organic material conversion process. The recirculation unit may comprise one or more pumps for conveying at least a part of the membrane filter permeate.

Further, the apparatus of the disclosure may comprise a recirculation unit for returning at least a part of the retentate of the membrane filter to the hydrothermal organic material conversion process, i.e., the HTC process. The recirculation unit may comprise one or more pumps for conveying at least a part of the membrane filter retentate. Moreover, the apparatus may further comprise a mixing unit for mixing condensates generated in the hydrothermal organic material conversion process and/or a processing step of the conversion product into the process water obtained from the first separation unit and/or the second component and/or the permeate of the membrane filter. The mixing unit may be a receptacle, such as a pipe, a tube, a vessel or the like, in which the condensates and the process water and/or the second component and/or the membrane filter permeate are mixed.

The apparatus may comprise a plurality of mixing units, e.g., two or more, three or more or four or more mixing units. For example, the apparatus may comprise a mixing unit for mixing condensates generated in the hydrothermal organic material conversion process and/or a processing step of the conversion product into the process water obtained from the first separation unit and/or a mixing unit for mixing condensates generated in the hydrothermal organic material conversion process and/or a processing step of the conversion product into the second component and/or a mixing unit for mixing condensates generated in the hydrothermal organic material conversion process and/or a processing step of the conversion product into the permeate of the membrane filter.

In one embodiment, the second separation unit comprises a first filtering unit connected to the first separation unit, wherein the first filtering unit is arranged to receive the process water from the first separation unit and to filter the process water, and a second filtering unit connected to the first filtering unit, wherein the second filtering unit is arranged to receive a permeate from the first filtering unit and to filter the permeate. In this embodiment, the second separation unit further comprises a concentrator, such as a thermal concentrator, connected to the first filtering unit and the second filtering unit, wherein the concentrator is arranged to receive a retentate from the first filtering unit and a retentate from the second filtering unit and to concentrate the retentate from the first filtering unit and the retentate from the second filtering unit so as to obtain the second component.

The apparatus may further comprise a supply unit for supplying the retentate from the first filtering unit and the retentate from the second filtering unit to the concentrator.

The first filtering unit may be a nanofiltration unit. The nanofiltration unit may be a membrane filter comprising a nanofiltration membrane as described above.

The second filtering unit may be a membrane filter, e.g., a membrane filter comprising a dense membrane, such as a reverse osmosis membrane.

The same membrane filter, i.e., the same single membrane filter, may be used to receive and filter the second component and to receive and filter the permeate from the first filtering unit.

The apparatus of the disclosure is an apparatus for performing the method of the invention. Hence, the further features disclosed in connection with the above description of the method of the invention may also be applied to the apparatus of the disclosure.

### Brief Description of the Drawings

Hereinafter, non-limiting examples are explained with reference to the drawings, in which:
- Fig. 1: shows a schematic view of an apparatus according to a first embodiment of the present disclosure;
- Fig. 2: shows a schematic view of a portion of an apparatus according to a second embodiment of the present disclosure; and
- Figs. 3(a) and (b): show schematic views of second separation units of apparatuses according to third and fourth embodiments of the present disclosure.

### Detailed Description of Preferred Embodiments

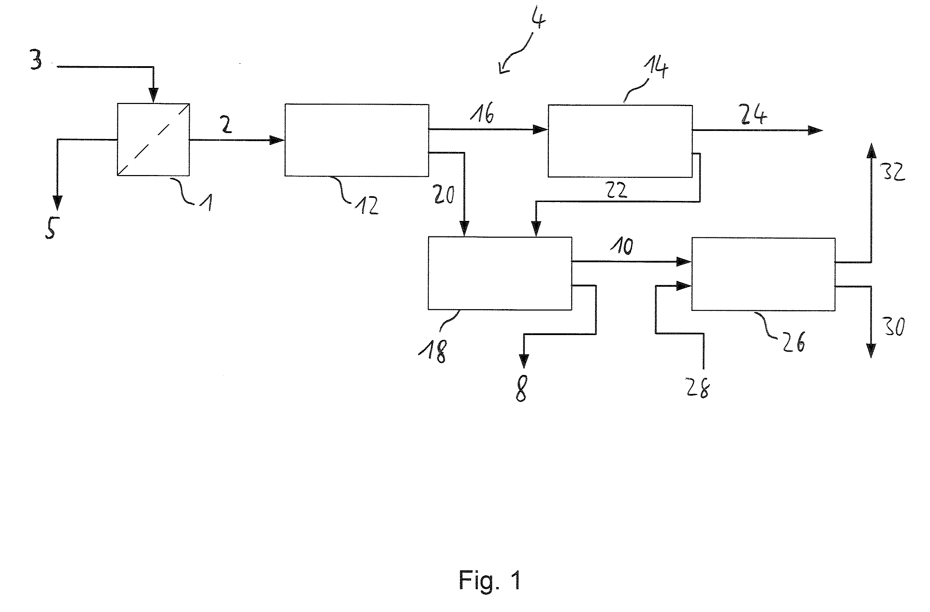

Fig. 1 shows a schematic view of an apparatus according to a preferred first embodiment of the present disclosure.

The apparatus shown in Fig. 1 comprises a first separation unit 1 for separating the process water 2 from a conversion product 3 obtained in the hydrothermal organic material conversion process, i.e., the HTC process, and a second separation unit 4 connected to the first separation unit 1, wherein the second separation unit 4 is arranged to receive the process water 2 from the first separation unit 1 and to separate the process water 2 from the first separation unit 1 into a first component 8 and a second component 10 so that the second component 10 is substantially free of salts.

The first separation unit 1 may be a filter, a thermal separation unit, a combined mechanical and thermal separation unit or the like.

The second separation unit 4 comprises a first filtering unit 12 connected to the first separation unit 1, wherein the first filtering unit 12 is arranged to receive the process water 2 from the first separation unit 1 and to filter the process water 2, and a second filtering unit 14 connected to the first filtering unit 12, wherein the second filtering unit 14 is arranged to receive a permeate 16 from the first filtering unit 12 and to filter the permeate 16. The first filtering unit 12 is a nanofiltration unit comprising a nanofiltration membrane. The second filtering unit 14 is a membrane filter comprising a dense membrane. The dense membrane of the second filtering unit 14 is a reverse osmosis membrane.

Further, the second separation unit 4 comprises a concentrator 18 connected to the first filtering unit 12 and the second filtering unit 14, wherein the concentrator 18 is arranged to receive a retentate 20 from the first filtering unit 12 and a retentate 22 from the second filtering unit 14 and to concentrate the retentate 20 from the first filtering unit 12 and the retentate 22 from the second filtering unit 14 so as to obtain the second component 10.

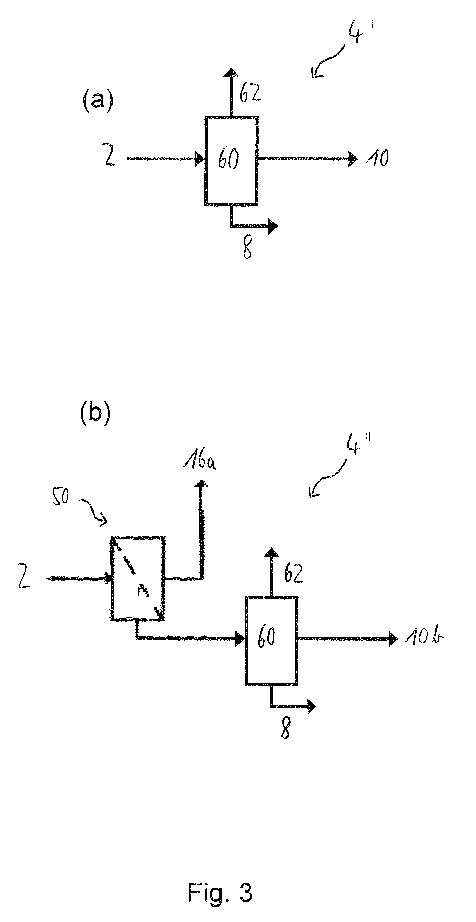

The concentrator 18 is a thermal concentrator, e.g., an evaporation unit, such as that described with reference to Fig. 3(a) below. The concentrator 18 produces a concentrate as the first component 8 and a distillate as the second component 10. Moreover, the second separation unit 4 produces a third component, i.e., a permeate 24 of the second filtering unit 14.

Further, the apparatus comprises a membrane filter 26 connected to the concentrator 18 and comprising a dense membrane, wherein the dense membrane is arranged to receive the second component 10 from the concentrator 18 and to filter the second component 10. The dense membrane of the membrane filter 26 is a reverse osmosis membrane.

In operation of the apparatus of the first embodiment of the disclosure, the conversion product 3 obtained in the hydrothermal organic material conversion process, i.e., the HTC process, is supplied to the first separation unit 1 which separates the conversion product 3 into the process water 2 and a thickened or solid product 5, such as an HTC coal or coal-like material. The process water 2 is fed to the first filtering unit 12 and separated into the nanofiltration permeate 16 and the nanofiltration retentate 20. The nanofiltration permeate 16 is supplied to the second filtering unit 14 and separated by the second filtering unit 14 into the permeate 24 and the retentate 22.

The nanofiltration retentate 20 and the retentate 22 of the second filtering unit 14 are supplied to the concentrator 18 and concentrated by the concentrator 18 so as to obtain the second component 10 which is substantially free of salts.

The concentrator 18 produces the second component 10 and the first component 8. The second component 10 is fed to the membrane filter 26. Further, condensates 28 from the hydrothermal organic material conversion process, i.e., the HTC process, and/or adjacent product treatment are supplied to the membrane filter 26. Also the condensates 28 are substantially free of salts. The second component 10 and the condensates 28 are separated by the membrane filter 26 into a retentate 30 and a permeate 32. Both the retentate 30 and the permeate 32 of the membrane filter 26 are substantially free of salts.

At least a part of the retentate 30 of the membrane filter 26, which is substantially free of salts and has a high level of COD, may be returned to the hydrothermal organic material conversion process, i.e., the HTC process, for adjusting the total solids content of the biomass input into the hydrothermal organic material conversion process, for example, in the mixing stage of the HTC process, to a desired value.

The permeate 24 of the second filtering unit 14 and the permeate 32 of the membrane filter 26, which are purified water, may be used for steam generation in a steam generator (not shown) used in the hydrothermal organic material conversion process or be disposed to the public sewage system in an inexpensive manner or treated onsite in an industrial wastewater treatment plant. Further, the permeate 24 of the second filtering unit 14 and the permeate 32 of the membrane filter 26 may be combined, e.g., into a single stream, for further use and/or disposal thereof as described above.

The first component 8 may be burned in a combustion unit (not shown) and/or turned over to a dedicated waste disposal company and/or used as an industrial additive, such as an adhesive agent, e.g., for wood pelleting, and/or for the generation of biogas, e.g., by anaerobic digestion.

Hence, the apparatus of the first embodiment shown in Fig. 1 allows for an efficient and inexpensive treatment of process water 2 originating from a hydrothermal organic material conversion process, i.e., an HTC process.

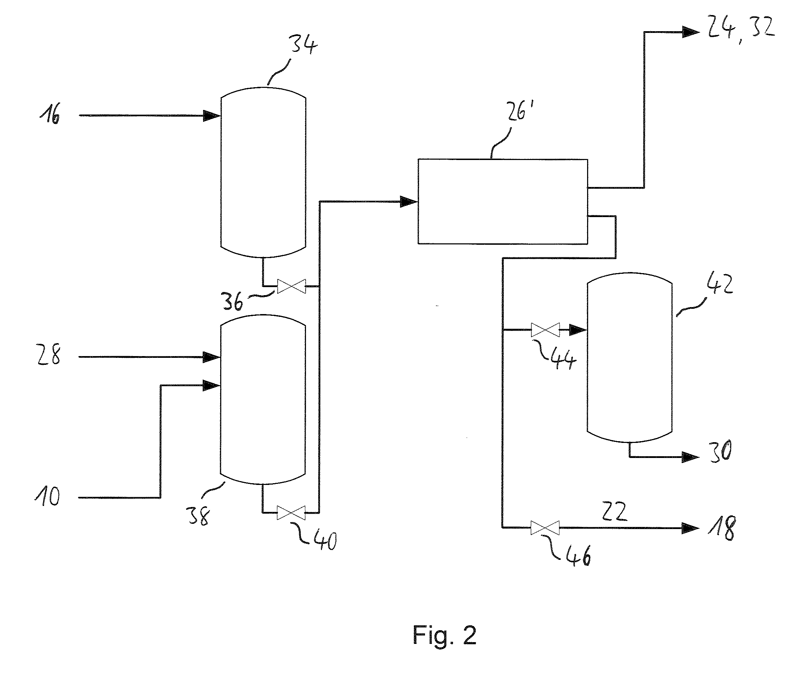

Fig. 2 shows a schematic view of a portion of an apparatus according to a preferred second embodiment of the present disclosure.

The apparatus of the second embodiment also comprises the elements which have been described above for the apparatus of the first embodiment. Hence, these elements have been omitted in Fig. 2. The apparatus of the second embodiment differs from the apparatus of the first embodiment in that the second filtering unit 14 and the membrane filter 26 are replaced by a single membrane filter 26'.

The membrane filter 26' comprises a dense membrane. The dense membrane is a reverse osmosis membrane.

The apparatus of the second embodiment comprises a first buffer vessel 34 which is connected to the membrane filter 26' through a first valve 36, a second buffer vessel 38 which is connected to the membrane filter 26' through a second valve 40, a third buffer vessel 42 which is connected to the membrane filter 26' through a third valve 44, and a fourth valve 46 through which the membrane filter 26' is connected to the concentrator 18.

The first buffer vessel 34 is arranged to receive the nanofiltration permeate 16 from the first filtering unit 12. The second buffer vessel 38 is arranged to receive the second component 10 from the concentrator 18 and the condensates 28.

The third buffer vessel 42 is arranged to receive the retentate 30 from the membrane filter 26'.

In operation of the apparatus according to the second embodiment, the single membrane filter 26' alternates between the function of the second filtering unit 14 and the membrane filter 26, as will be detailed in the following.

When the membrane filter 26 performs the function of the second filtering unit 14, the first and fourth valves 36, 46 are open and the second and third valves 40, 44 are closed. Hence, the nanofiltration permeate 16 is supplied through the open first valve 36 to the membrane filter 26' and separated into the permeate 24 and the retentate 22. The retentate 22 is fed to the concentrator 18 through the open fourth valve 46.

When the membrane filter 26' performs the function of the membrane filter 26, the second and third valves 40, 44 are open and the first and fourth valves 36, 46 are closed. Thus, the second component 10 and the condensates 28 are fed from the second buffer vessel 38 through the open second valve 40 to the membrane filter 26' and separated by the membrane filter 26' into the permeate 32 and the retentate 30. The retentate 30 is supplied to the third buffer vessel 42 through the open third valve 44. From the third buffer vessel 42, the retentate 30 may be returned to the hydrothermal organic material conversion process, e.g., to the mixing stage of the HTC process.

The membrane filter 26' cycles between the function of the second filtering unit 14 and the function of the membrane filter 26. This cycle may be automated. The parameters of this cycle, such as the durations of the individual duty phases, may be made dependent on the liquid levels in the individual buffer vessels 34, 38, 42, e.g., on the need to reduce the liquid level of one of the buffer vessels 34, 38, 42, or to maintain operation of one of the downstream processes, such as biomass mashing, steam generation from the retentate and/or the permeate of the membrane filter 26' or thermal concentration, e.g., evaporation in the concentrator 18.

If the liquid demand of the biomass preparation step of the hydrothermal organic material conversion process or the steam generator is exceeding the average amount of retentate provided by the membrane filter 26' during the phase in which the membrane filter 26' performs the function of the membrane filter 26, two approaches or a combination thereof may be adopted, as will be detailed in the following.

In the first approach, the retentate 30 of the membrane filter 26' is supplemented by condensates 28 and/or distillate, such as the second component 10. For this purpose, also the retentate 22 of the membrane filter 26' and/or the nanofiltration retentate 20 and/or the permeate 24, 32 of the membrane filter 26' may be used.

In the second approach, the effectiveness of the membrane filter 26' is regulated down, preferably by reducing the operating pressure, thus reducing the concentration factor and the power consumption. Since conventional membrane filter equipment generally uses an automated pressure control valve and/or variable speed pumps, such an operation is straightforward and can be readily automated.

An optional component of such a cycle could be an occasional membrane cleaning operation. The resulting wastewater, usually containing cleaning detergents, can be processed either in the concentrator 18, e.g., a thermal concentrator, or the hydrothermal biomass conversion process, i.e., the HTC process. If the detergents contain surfactants, this could even promote positive effects on the conversion process (see, for example, M.-M. Titirici and M. Antonietti, "Chemistry and materials options of sustainable carbon materials made by hydrothermal carbonization", Chem. Soc. Rev., 39, 2010, pages 103 to 116).

Another optional step is a further concentration of the content of the third buffer vessel 42 by recycling its content over the membrane filter 26'.

Since the apparatus of the second embodiment only comprises a single membrane filter 26', the treatment of process water originating from a hydrothermal organic material conversion process, i.e., the HTC process, can be performed in a particularly efficient and inexpensive manner using a simple apparatus setup.

Fig. 3 shows schematic views of second separation units 4', 4" of apparatuses according to preferred third and fourth embodiments of the present disclosure. The apparatuses of the third and fourth embodiments also comprise the elements which have been described above for the apparatus of the first embodiment. Hence, these elements have been omitted in Figs. 3(a) and (b). The apparatuses of the third and fourth embodiments differ from the apparatus of the first embodiment in that the second separation unit 4 is replaced with the second separation unit 4' and the second separation unit 4'', respectively.

The second separation unit 4' of the apparatus of the third embodiment is a thermal concentrator 60, such as an evaporation unit, as is schematically shown in Fig. 3(a). The thermal concentrator 60 is connected with a heat source (not shown) for evaporating the process water 2 fed to the thermal concentrator 60 from the first separation unit 1. The thermal concentrator 60 produces a concentrate as the first component 8 and a vapour as the second component 10. The vapour may be fed to a condenser (not shown) which is connected to a cooling source (not shown), such as a cooling water cycle. In this case, the vapour is condensed in the condenser and the resulting condensate or distillate is fed to the membrane filter 26. The condensate or distillate may be further cooled prior to the membrane filtering step by a heat exchanger (not shown) or the like. Flue gases 62 from the thermal concentrator 60 and/or the condenser are discharged, e.g., by a vacuum source, such as a vacuum pump, and may be supplied to a combustion unit (not shown).

The second separation unit 4'' of the apparatus of the fourth embodiment is a combined nanofiltration and thermal concentration unit, e.g., a combined nanofiltration and evaporation unit, as is schematically shown in Fig. 3(b). The combined nanofiltration and thermal concentration unit comprises a nanofiltration unit 50 and a thermal concentrator 60 which are connected to each other.

The nanofiltration unit 50 comprises a nanofiltration membrane separating the process water 2 into a permeate 16a and a retentate which is supplied to the thermal concentrator 60. The retentate of the nanofiltration unit 50 is evaporated in the thermal concentrator 60, thereby separating the retentate into a concentrate as the first component 8 and a vapour 10b.

The vapour 10b may be fed to a condenser (not shown) and condensed in the same manner as described above with reference to Fig. 3(a). The permeate 16a of the nanofiltration unit 50 and/or the condensed vapour 10b of the thermal concentrator 60 constitute the second component 10 of the combined nanofiltration and thermal concentration unit, and are fed to the membrane filter 26.

In the following, examples of operations of the apparatuses according to the first to third embodiments are presented, exemplifying different embodiments of the method of the invention.

First, a comparative example is presented. The comparative example is performed using an apparatus with the configuration shown in Fig. 1 in which the second separation unit 4 has been replaced by a single nanofiltration unit.

In the comparative example, 1,000 kg/h of a biomass, such as leaves from street collection, with a total solids content of 35% are subjected to a hydrothermal organic material conversion process, namely an HTC process. In order to achieve a pumpable total solids content of the biomass of 25%, another 400 kg/h of water and/or water-based recycling streams are added. For good heat management, 114 kg/h of these 400 kg/h are made up from steam recycling directly from the HTC process. The remaining 286 kg/h are made up from recycling water as described below.

After emission from the HTC process, accompanied by a removal of steam via flashing, a conversion product with a mass flow of 1,385 kg/h is supplied to a membrane filter press, thus producing a filter cake with a mass flow of 325 kg/h and process water with a mass flow of 1,060 kg/h. The process water is fed to the nanofiltration unit which operates at a membrane yield of 70%, resulting in a nanofiltration permeate with a mass flow of 742 kg/h and a nanofiltration retentate with a mass flow of 318 kg/h.

The nanofiltration permeate is mixed with condensates originating from the HTC process, making up a stream with a mass flow of 245 kg/h, and the combined stream with a mass flow of 987 kg/h is treated using a membrane filter with a reverse osmosis membrane operating at a membrane yield of 85%. In this way, a reverse osmosis permeate with a mass flow of 839 kg/h and a reverse osmosis retentate with a mass flow of 148 kg/h are produced. From the reverse osmosis permeate, a side stream with a mass flow of 286 kg/h is treated for use as feed water for steam generation, while the remaining part of the reverse osmosis permeate is discharged as surplus, thus removing water from the system efficiently and in a suitable condition.

The sum of retentate streams thus equals 466 kg/h. These retentates not only contain all of the salts originally present in the process water, but also exceed the liquid demand of 286 kg/h processed in mixing the biomass with liquid.

A first example is performed using the apparatus according to the first embodiment or the apparatus according to the second embodiment.

In the first example, 1,000 kg/h of a biomass, such as leaves from street collection, with a total solids contents of 35% are subjected to a hydrothermal organic material conversion process, namely an HTC process. In order to achieve a pumpable total solids content of 25%, another 400 kg/h of water and/or water-based recycling streams are added to the biomass. For good heat management, 114 kg/h of these 400 kg/h are made up from steam recycling directly from the HTC process. The remaining 286 kg/h are made up from recycling water as described below.

After emission from the HTC process, accompanied by a removal of steam via flashing, the conversion product 3 with a mass flow of 1,385 kg/h is supplied to the first separation unit 1, such as a membrane filter press, thus producing a solid product 5, i.e., a filter cake, with a mass flow of 325 kg/h and process water 2 with a mass flow of 1,060 kg/h.

The process water 2 is fed to the first filtering unit 12 which operates at a membrane yield of 70%, resulting in a nanofiltration permeate 16 with a mass flow of 742 kg/h and a nanofiltration retentate 20 with a mass flow of 318 kg/h.

In contrast to the approach of the comparative example, the nanofiltration permeate 16 is not mixed with condensates but supplied to the second filtering unit 14, where it is separated into a permeate 24 with a mass flow of 631 kg/h, which is suitable for steam generation feed water treatment and/or disposal, and a retentate 22 with a mass flow of 111 kg/h.

Both the nanofiltration retentate 20 and the retentate 22 of the second filtering unit 14, which have a total mass flow of 429 kg/h, are supplied to the concentrator 18, which is a thermal concentrator, and subjected to a thermal concentration step. A concentration factor of a yield of approximately 50% for this thermal concentration step was chosen, resulting in the production of a pumpable liquid concentrate as the first component 8, having a mass flow of 214 kg/h, and a distillate as the second component 10, having a mass flow of 215 kg/h. Herein, the term "yield" defines that 50% of the feed are turned into distillate.

The thermal concentration step has a heat requirement of approximately 150 kW, advanced energy saving measures notwithstanding. If vacuum evaporation is applied in the thermal concentration step, this requirement can be fulfilled by using waste heat, e.g., cooling water from a nearby coproduction plant. The distillate, i.e., the second component 10, is mixed with condensates 28 from the HTC process having a mass flow of 245 kg/h, resulting in a substantially salt free but organic rich stream with a mass flow of 460 kg/h. This stream is supplied to the membrane filter 26 and subjected to reverse osmosis filtering with a yield of 85%. In this way, a membrane filter retentate 30 with a mass flow of 69 kg/h and a purified membrane filter permeate 32 with a mass flow of 391 kg/h are produced, both of which are substantially free of salts.

The above treatment process has been described for the apparatus of the first embodiment which comprises a second filtering unit 14 and a membrane filter 26. However, this treatment process may be carried out in the same manner using the apparatus of the second embodiment which has the single membrane filter 26' instead of the second filtering unit 14 and the membrane filter 26.

The production of the substantially salt free membrane filter retentate 30 with a mass flow of 69 kg/h does not exceed the amount which can be processed favourably in the biomass processing stage, i.e., 286 kg/h. The salt rich and organic rich concentrate stream from the thermal concentrator 18, i.e., the first component 8, has a mass flow of 214 kg/h, which is significantly smaller than the mass flow of the sum of retentate streams of 466 kg/h in the comparative example. Further, due to the higher concentration factor, the concentrate stream is easier to transport for further use, e.g., for anaerobic co-digestion.

A second example is performed using the apparatus of the first embodiment or the apparatus of the second embodiment.

The second example differs from the first example in that the membrane filtering step in the membrane filter 26 or the membrane filter 26' operating as the membrane filter 26 is performed in such a way, e.g., by a controlled reduction of the operating pressure, that the yield is reduced to the point where the liquid demand of the biomass processing stage of the HTC process is approximately met by the production of the membrane filter retentate 30.

In this way, the liquid demand can be fully satisfied by the membrane filter retentate 30, so that no additional fresh water is required. Hence, the process water treatment method can be performed in a particularly efficient and inexpensive manner.

A third example is performed using the apparatus of the first embodiment or the apparatus of the second embodiment.

The third example differs from the first example in that the thermal concentration step in the thermal concentrator 18 is performed in such a way that a yield of 80% distillate, i.e., second component 10, from the feed is generated, producing only a small amount of a thick and sticky paste as concentrate, i.e., first component 8, with a mass flow of 86 kg/h. Due to the increase in distillate production, a membrane filter retentate 30 with a mass flow of 84 kg/h and a purified membrane filter permeate 32 with a mass flow of 474 kg/h are produced, both of which are substantially salt free.

A fourth example is performed using the apparatus of the first embodiment or the apparatus of the second embodiment.

The fourth example differs from the third example in that the thermal concentration step in the thermal concentrator 18 is performed along with a drying operation of the solid product 5, i.e., the HTC coal filter cakes. This reduction in equipment leads to an especially economic and inexpensive installation. While the quality of the HTC coal in terms of ash content may be slightly reduced, this slight quality reduction is well acceptable for certain applications, such as sewage sludge treatment, where the quality of the produced solid is of minor importance.

A fifth example is performed using the apparatus of the third embodiment which has a thermal concentrator 60 as the second separation unit 4' instead of the second separation unit 4 of the apparatus of the first embodiment.

The fifth example differs from the comparative example in that the process water 2 supplied from the first separation unit 1, e.g., the membrane filter press, is directly fed to the thermal concentrator 60. Using a heating power of approximately 620 kW, process water 2 with a mass flow of 1,060 kg/h is separated into a salt and organic rich concentrate with a mass flow of 150 kg/h as the first component 8 and a distillate with a mass flow of 910 kg/h as the second component 10. The distillate, i.e., the second component 10, is combined with condensates 28 from the HTC process with a mass flow of 245 kg/h, resulting in an organic rich but substantially salt free water stream with a total mass flow of 1,155 kg/h. This water stream is fed to the membrane filter 26 and separated by the membrane filter 26 into an organic rich membrane filter retentate 30 with a mass flow of 173 kg/h and a purified membrane filter permeate 32 with a mass flow of 982 kg/h, both of which are substantially free of salts.

The production of a substantially salt free membrane filter retentate 30 with a mass flow of 173 kg/h does not exceed the amount which can be processed favourably in the biomass processing stage, i.e., 286 kg/h. The salt rich and organic rich concentrate stream from the thermal concentration step, i.e., the first component 8, has a mass flow of 150 kg/h, which is significantly smaller than the mass flow of the sum of retentate streams of 466 kg/h from the comparative example.

By using the apparatus of the third embodiment of the disclosure, the process water treatment method can be performed in a particularly simple manner. The apparatus of the third embodiment of the disclosure may be used in a particularly advantageous manner, if a sufficient waste heat source is available.

The apparatuses of the first and second embodiments of the disclosure provide the advantage that they require a significantly lower heat input than the apparatus according to the third embodiment of the disclosure and may thus be used in a particularly advantageous manner if no such waste heat source is available.

A comparison of the first to fifth examples according to the present invention with the comparative example demonstrates that the present invention provides a method for the treatment of process water from a hydrothermal organic material conversion process which is improved in terms of both efficiency and costs.

## Claims

1. A method for the treatment of process water (2) from a hydrothermal organic material conversion process, the method comprising
a first separation step of separating the process water (2) from a conversion product (3) obtained in the hydrothermal organic material conversion process,
a second separation step of separating the process water (2) obtained in the first separation step into at least a first component (8) and a second component (10) so that the second component (10) is substantially free of salts, and
a membrane filtering step of filtering the second component (10) using a membrane filter (26, 26') comprising a dense membrane, wherein
the hydrothermal organic material conversion process is a hydrothermal carbonisation process, and
the conversion product (3) is a solid material.

2. The method according to claim 1, wherein the second separation step is a thermal concentration step.

3. The method according to claim 1 or 2, wherein the membrane filtering step is a reverse osmosis filtering step using a reverse osmosis membrane filter.

4. The method according to any one of the preceding claims, further comprising a step of returning at least a part of a retentate (30) of the membrane filter (26, 26') to the hydrothermal organic material conversion process.

5. The method according to any one of the preceding claims, wherein the second separation step comprises
a first filtering step of filtering the process water (2) obtained in the first separation step,
a second filtering step of filtering a permeate (16) obtained in the first filtering step,
a supply step of supplying a retentate (20) obtained in the first filtering step and a retentate (22) obtained in the second filtering step to a concentrator (18), and
a concentration step of concentrating the retentate (20) obtained in the first filtering step and the retentate (22) obtained in the second filtering step in the concentrator (18) so as to obtain the second component (10).

6. The method according to claim 5, wherein the first filtering step is a nanofiltration step.

7. The method according to claim 5 or 6, wherein the second filtering step is a membrane filtering step using a membrane filter (14, 26') comprising a dense membrane.

8. The method according to claim 7, wherein the second filtering step and the membrane filtering step of filtering the second component (10) are performed using the same membrane filter (26').

## Patentansprüche

1. Verfahren zur Behandlung von Prozesswasser (2) aus einem hydrothermalen organischen Materialumwandlungsverfahren, wobei das Verfahren umfasst:
einen ersten Trennschritt zum Abtrennen des Prozesswassers (2) von einem Umsetzungsprodukt (3), erhalten in dem hydrothermalen organischen Materialumwandlungsverfahren,
einen zweiten Trennschritt zum Trennen des Prozesswassers (2), erhalten in dem ersten Trennschritt, in mindestens eine erste Komponente (8) und eine zweite Komponente (10), so dass die zweite Komponente (10) im Wesentlichen frei von Salzen ist, und
ein Membranfiltrationsschritt zum Filtrieren der zweiten Komponente (10) unter Verwendung eines Membranfilters (26, 26'), umfassend eine dichte Membran, wobei
das hydrothermale organische Materialumwandlungsverfahren ein hydrothermales Carbonisierungsverfahren ist, und
das Umsetzungsprodukt (3) ein festes Material ist.

2. Verfahren gemäß Anspruch 1, bei dem der zweite Trennschritt ein thermaler Konzentrationsschritt ist.

3. Verfahren gemäß Anspruch 1 oder 2, bei dem der Membranfiltrationsschritt ein Umkehrosmose-Filtrationsschritt unter Verwendung einer Umkehrosmose-Filtermembran ist.

4. Verfahren gemäß einem der vorangehenden Ansprüche, zusätzlich umfassend einen Schritt des Zurückführens von mindestens einem Teil eines Retentats (30) des Membranfilters (26, 26') zu dem hydrothermalen organischen Materialumwandlungsverfahren.

5. Verfahren gemäß einem der vorangehenden Ansprüche, bei dem der zweite Trennschritt umfasst:
einen ersten Filtrationsschritt zum Filtrieren des Prozesswassers (2), erhalten in dem ersten Trennschritt,
einen zweiten Filtrationsschritt zum Filtrieren eines Permeats (16), erhalten in dem ersten Filtrationsschritt,
einen Zufuhrschritt zum Zuführen eines Retentats (20), erhalten in dem ersten Filtrationsschritt, und eines Retentats (22), erhalten in dem zweiten Filtrationsschritt, in einen Konzentrator (18), und
einen Konzentrationsschritt zum Konzentrieren des Retentats (20), erhalten in dem ersten Filtrationsschritt, und des Retentats (22), erhalten in dem zweiten Filtrationsschritt, in dem Konzentrator (18), um die zweite Komponenten (10) zu erhalten.

6. Verfahren gemäß Anspruch 5, bei dem der erste Filtrationsschritt ein Nanofiltrationsschritt ist.

7. Verfahren gemäß Anspruch 5 oder 6, bei dem der zweite Filtrationsschritt ein Membranfiltrationsschritt unter Verwendung eines Membranfilters (14, 26'), umfassend eine dichte Membran, ist.

8. Verfahren gemäß Anspruch 7, bei dem der zweite Filtrationsschritt und der Membranfiltrationsschritt zum Filtrieren der zweiten Komponente (10) unter Verwendung desselben Membranfilters (26') durchgeführt werden.

## Revendications

1. Procédé pour le traitement d'eau de processus (2) issue d'un processus de conversion de matériau organique hydrothermique, le procédé comprenant une première étape de séparation consistant à séparer l'eau de processus (2) d'un produit de conversion (3) obtenu dans le processus de conversion de matériau organique hydrothermique,
une seconde étape de séparation consistant à séparer l'eau de processus (2) obtenue dans la première étape de séparation en au moins un premier composant (8) et un second composant (10) de telle sorte que le second composant (10) est sensiblement exempt de sels, et
une étape de filtration sur membrane consistant à filtrer le second composant (10) en utilisant un filtre à membrane (26, 26') comprenant une membrane dense, dans lequel
le processus de conversion de matériau organique hydrothermique est un processus de carbonisation hydrothermique, et
le produit de conversion (3) est un matériau solide.

2. Procédé selon la revendication 1, dans lequel la seconde étape de séparation est une étape de concentration thermique.

3. Procédé selon la revendication 1 ou 2, dans lequel l'étape de filtration sur membrane est une étape de filtration par osmose inverse utilisant un filtre à membrane d'osmose inverse.

4. Procédé selon l'une quelconque des revendications précédentes, comprenant en outre une étape de retour d'au moins une partie d'un rétentat (30) du filtre à membrane (26, 26') vers le processus de conversion de matériau organique hydrothermique.

5. Procédé selon l'une quelconque des revendications précédentes, dans lequel la seconde étape de séparation comprend
une première étape de filtration consistant à filtrer l'eau de processus (2) obtenue dans la première étape de séparation,
une seconde étape de filtration consistant à filtrer un perméat (16) obtenu dans la première étape de filtration,
une étape d'alimentation consistant à fournir un rétentat (20) obtenu dans la première étape de filtration et un rétentat (22) obtenu dans la seconde étape de filtration à un concentrateur (18), et
une étape de concentration consistant à concentrer le rétentat (20) obtenu dans la première étape de filtration et le rétentat (22) obtenu dans la seconde étape de filtration dans le concentrateur (18) de sorte à obtenir le second composant (10).

6. Procédé selon la revendication 5, dans lequel la première étape de filtration est une étape de nanofiltration.

7. Procédé selon la revendication 5 ou 6, dans lequel la seconde étape de filtration est une étape de filtration sur membrane utilisant un filtre à membrane (14, 26') comprenant une membrane dense.

8. Procédé selon la revendication 7, dans lequel la seconde étape de filtration et l'étape de filtration sur membrane consistant à filtrer le second composant (10) sont effectuées en utilisant le même filtre à membrane (26').
